# EUROPEAN PATENT APPLICATION

(11) **EP 0 634 877 A2**
(43) Date of publication of application: **18.01.1995**
(21) Application number: 94304988.2
(22) Date of filing: 06.07.1994
(51) Int. Cl.: H04Q 3/00, H04Q 7/00

(54) **System and method for communicating with travelers**

(30) Priority: 15.07.1993 US 92970
(71) Applicant: AT&T Corp., New York, NY 10013-2412 (US)
(72) Inventor: Chandra, Amitabh, Westfield, New Jersey 07076 (US); Goldman, Shelley B., East Brunswick, New Jersey 08816 (US); Foladare, Mark Jeffrey, Kendall Park, New Jersey 08824 (US); Mayer, Daniel J., Warren, New Jersey 07059 (US); Silverman, David Phillip, Somerville, New Jersey 08876 (US); Stansbury, Suzanne, Eatontown, New Jersey 07724 (US); Weber, Roy Philip, Bridgewater, New Jersey 08807 (US); Wegrzynowicz, Carol Ann, Holmdel, New Jersey 07733 (US)
(74) Representative: Buckley, Christopher Simon Thirsk

(57) **Abstract**

Travelers can be reached via a cellular telephone call while at a remote location (160-1--160-N), by using a mobility system (110/130) containing a database record (120/140) for each traveler using the system. The record contains information indicating the traveler's itinerary, including the dates/times during which the traveler will be away from home, and an information field containing the "reach number" of a cellular telephone instrument to be provided to the traveler in each remote location. A temporary personal communication service (PCS) traveler profile is established for the traveler, and the PTN is given to the traveler for distribution to persons likely to call the traveler while he or she is away from home. The profile is arranged to include the reach numbers of the specific cellular telephone instruments that are to be provided to the traveler; the profile is made "active" only for the time period during which the traveler will have that telephone instrument. When a call is placed to the traveler (using the PTN) during a time period when the traveler is away from home, the PCS traveler profile is retrieved, and the call is completed to the cellular telephone number corresponding to the specific cellular telephone instrument that was provided to the traveler. Optionally, callers who use the PTN to reach the traveler are interrupted by a prompting device that apprises the callers of the fact that the traveler is away from home, and permits them to hang up or leave a message (in 105) for the traveler.

## Description

### Field of the Invention

This invention relates generally to a system and method for communicating with travelers and, in particular, to a system that allows (wireless cellular or personal mobile) telephone calls to be completed to a person while traveling, such as in a service area in a foreign country or territory that has incompatible wireless systems.

### Background of the Invention

Increased mobility and the ability to communicate with a subscriber, anytime, anywhere, is the overarching goal of many new telecommunications services. One such service is known as the EasyReach^{SM} service, now being offered by AT&T. With EasyReach service, a telephone subscriber is given a special, personal telephone number (PTN), and calls placed to that number are routed by the telecommunications carrier to a "reach number" listed in a database. The database is arranged to store easily updatable profiles, which specify which reach numbers shall be used and at what times, to complete calls to each subscriber. Thus, if the subscriber is at the office during business hours, calls can be routed there between say 9:00 A.M. and 5:00 P.M. At other times, the calls can be routed to the subscriber's home telephone. If needed, due to a special circumstance such as a schedule change, holiday or a sick day, profile updates can be entered in the database by the subscriber. In addition, the subscriber can route calls to a cellular telephone during the trip to and from the office. Also, a subscriber can route calls to a messaging system for later retrieval from his/her message "box". A description of EasyReach service is contained in patent application of Creswell et al, serial no. 07/754,109, filed on September 3, 1991, and continuing application 07/905,265, filed on June 26, 1992, and assigned to the same assignee as the present application.

Another approach to communicating with travelers has been the improvement in the way calls to roaming cellular subscribers are completed. Normally, when a call is placed to a cellular subscriber, the call is routed by the wireline telecommunications carrier to the mobile telephone switching office (MTSO) serving the "home" service area for that subscriber. If the subscriber is in that area, the call can be completed. However, when the cellular subscriber is "roaming", i.e., traveling outside of his or her home territory, additional coordination between MTSO's is required. In one proposed system, coordination is accomplished when the roaming subscriber initiates a cellular call, and the call is received by the MTSO serving the "foreign" territory. This MTSO extracts the mobile identification number (MIN) from the signal generated by the subscriber placing the call, and then performs a database lookup to determine which cellular carrier serves the subscriber with that MIN. The foreign MTSO then sends a message to the home MTSO, informing the latter where the subscriber is. In this way, calls placed subsequently to the cellular subscriber are forwarded by the home MTSO to the foreign MTSO and then, over the air, to the subscriber. A description of a yet improved technique for completing calls to roaming cellular subscribers is contained in patent applications of Pehlert et al, serial No. 07/999,073 filed on December 31, 1992, and serial No. 07/999,200 filed on December 31, 1992, and assigned to the same assignee as the present application.

While the improvements in cellular roaming and the availability of the EasyReach service have increased the ease with which a person who is traveling can receive telephone calls, these improvements have not addressed the problem associated with travel, particularly international travel, in which either (a) the person traveling does not wish to take his or her cellular telephone instrument with them for the trip, or (b) the cellular service provider at the destination does not use compatible equipment or "recognize" that type of cellular telephone, for the purpose of roaming, or (c) the coordination required to complete calls to roamers is not available. The first situation may be due to the fact that other family members use the telephone, or because the phone is installed in a vehicle, or for any of a number of other reasons; the second and third situations may arise because of technical differences or because the agreements and systems needed to implement roaming on a global basis are not in place.

If the traveler does not have his or her cellular telephone instrument with them, then, at the present time, a service such as EasyReach can only be used to reach the traveler at a wireline telephone, which is associated with the "reach number" entered in the traveler's (subscriber's) profile. If the cellular service provider at the destination location uses incompatible equipment, enhanced roaming, as described above, is also not possible.

### Summary of the Invention

In accordance with the present invention, travelers can be reached via a cellular telephone call virtually anywhere in the world, by using a mobility system containing a database record for each traveler using the system. The record, which may be created when a person's travel plans are established, or later while the person is traveling, contains information indicating the traveler's itinerary, including the dates/times during which the traveler will be in one or more particular foreign countries or remote geographic areas, and an information field containing the telephone number (the "reach number") of a cellular telephone instrument to be provided to the traveler in each such location. The cellular telephone number field is populated by obtaining or retrieving inventory information identifying specific cellular telephone numbers associated with instruments available for this purpose in the destination location to be visited during the appropriate time periods.

A temporary personal communication service (PCS) (e.g., EasyReach) traveler profile is established for the traveler, and the PTN is given to the traveler for distribution to persons likely to call the traveler while he or she is away from home. The profile is arranged to include the reach numbers of the specific cellular telephone instruments that are to be provided to the traveler, the profile is made "active" only for the time period during which the traveler will have that telephone instrument.

When a call is placed to the traveler (using the PTN) during a time period when the traveler is away from home, the PCS traveler profile is retrieved, and the call is completed to the cellular telephone number corresponding to the specific cellular telephone instrument that was provided to the traveler upon arrival at the remote location. Callers who use the PTN to reach the traveler, can be interrupted by a prompting device that apprises the callers of the fact that the traveler is away from home, and permits them to hang up or leave a message for the traveler. The messaging feature is important in the case of foreign travel, because of international time differences, and caller billing considerations. The prompting intercept can also be used to shorten the required "shelf life" of PTN's assigned to travelers, by associating a caller-invoked Traveler Identification Number (TIN) that serves to differentiate sequential assignees of the same PTN. Upon leaving each remote location, the traveler returns the cellular telephone instrument, the PCS traveler profile is updated, and the telephone and associated reach number are then ready for use by the next customer. If the traveler is traveling to another destination, the process just described is repeated. When the travel plans have been completed, the PTN is deactivated and re-cycled after an appropriate on-shelf interval.

Inventory information relating to available cellular instruments may be maintained locally in the mobility system, in which case a reservation message is transmitted to a remote processor in the destination location, and the reservation confirmed, so that, en-route or upon arrival of the traveler, the reserved cellular telephone number can be activated and provided to the traveler with the associated telephone instrument, illustratively in flight or at a booth/kiosk in the airport for foreign travel. If the inventory information is maintained in the remote processors, a query and response can be used to obtain that information.

In accordance with one feature of the invention, the traveler can choose to have the mobility system distribute the PTN to potential callers in the traveler's home location, and the reach number(s) to potential callers in the traveler's destination(s).

Because a traveler with a wireless telephone may not always be available to receive a call, the present invention includes a messaging system to answer calls on behalf of the traveler when he/she is not in possession of the telephone instrument, when the instrument is in use, or when the traveler does not answer.

In accordance with another aspect of the present invention, outgoing calls made by the traveler using the cellular telephone instrument may be billed to a convenient calling plan, such as USA Direct® service available from AT&T in foreign countries, by equipping the telephone instrument with a memory device storing the proper prefix or access number for that calling plan. When a call is originated from the telephone instrument, the memory is accessed, and the prefix is automatically added to the called number, or the access number is dialed. Alternatively, after the calling plan number is programmed into the phone's memory, it is accessed by pushing an appropriate memory button on the telephone. Advantageously, the traveler may bill calls made using the cellular telephone instrument to his or her home or business telephone number or account. Alternatively, the telephone instrument provided for use in the remote location territory can be equipped with call-activity-capture features (e.g., a smart card) which provides the information needed for bill submittal and payment upon the return of the instrument, or as part of the overall relationship between the service provider and the traveler. This alternative allows billing for local calls made in the remote location as well.

### Brief Description of the Drawings

The present invention will be more fully appreciated by consideration of the following detailed description, which should be read in light of the accompanying drawing in which:
Fig. 1 is an overall block diagram illustrating a system for completing telephone calls to a traveler while away from home, in accordance with the present invention;
Fig. 2 is a process diagram indicating how call completion is accomplished in personal communications service system 130 of Fig. 1;
Fig. 3 illustrates the format of a typical traveler record stored in traveler record database 120 in Fig. 1;
Fig. 4 is is a flow diagram illustrating the steps followed in the setup and traveler service process for creating a traveler record for a traveler desiring to receive telephone calls in a remote location;
Fig. 5 illustrates the process performed in mobility system 110 of Fig. 1 in order to reserve telephone instruments at the remote locations to be visited by a traveler;
Fig. 6 illustrates an alternative telephone instrument reservation process which is performed by remote processors 170 in the remote locations;
Fig. 7 illustrates the format for a typical inventory record stored in inventory database 171;
Fig. 8 illustrates the process for revising information in a traveler record when the update is initiated before a customer departs for a remote location;
Fig. 9 illustrates the process for revising information in a traveler record when the update is initiated after a traveler has arrived at a remote location;
Fig. 10 is a block diagram of a cellular telephone instrument arranged in accordance with the present invention;
Fig. 11 illustrates the process performed in the telephone of Fig. 10 when an outgoing call is initiated;
Fig. 12 illustrates the fields of records in subscriber PTN database 140 in PCS system 130; and
Fig. 13 describes the PTN message delivery process that distributes a traveler's PTN to potential callers in accordance with his/her instructions.

### Detailed Description

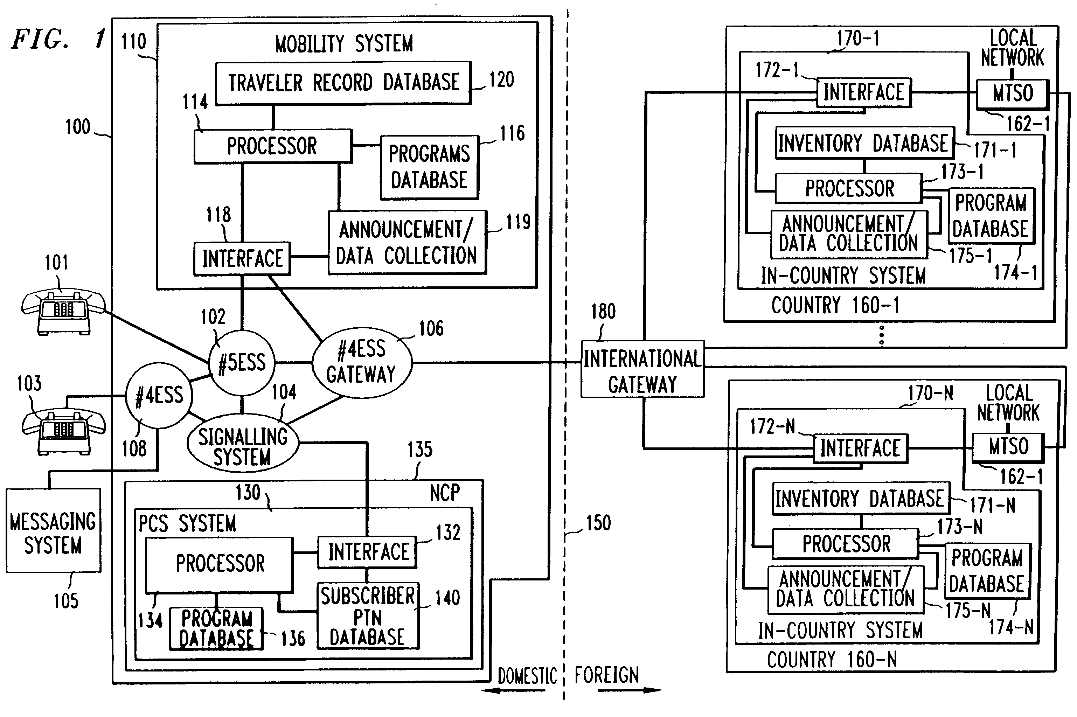

Referring first to Fig. 1, there is shown an overall block diagram illustrating a system for completing telephone calls to a traveler in a remote location or geographic area, in accordance with the present invention. The portion of Fig. 1 on the left of dividing line 150 represents the local portion of the system, while the portion of Fig. 1 located to the right of line 150 represents the portion of the system located in one or more remote locations.

The fundamental components of the present invention include a mobility system designated generally as 110 interconnected with a personal communications service (PCS) system 130, both of which may be part of a telecommunications network 100 such as the inter-exchange network of AT&T. Also included within network 100 are a number of interconnected switches, such as switch 102, which may be a 5ESS® electronic switching system available from AT&T, and switches 106 and 108, which may be 4ESS^{TM} electronic switching systems also available from AT&T. As is well known to those skilled in the art, switches 102, 106 and 108, and other well known network elements including signaling system 104, enable the conventional routing of calls placed from local telephones such as telephones 101 or 103 to a desired remote location.

The purpose of a personal communication service system such as PCS system 130 is to route calls made to a subscriber's personal telephone number (PTN) to that subscriber, wherever he or she may be. For this purpose, PCS system 130, which may be implemented as part of a network control point (NCP) 135, and may be co-located with mobility system 110, includes a subscriber PTN database 140 that contains, for each PCS subscriber, information associating the subscriber's PTN with a "reach number" at which the subscriber wishes to receive telephone calls. Subscriber PTN database 140 also contains unassigned PTN's. If desired, several reach numbers can be stored for a subscriber, and the date and/or time at which each reach number is active or "in service" can also be stored. A reach number associated with messaging system 105 may be provided as the default for instances when the traveler chooses not to answer, is unavailable (e.g., in transit), or to be used at the caller's option in lieu of communicating directly with the traveler. PCS system 130 also includes a processor 134, which operates under the control of programs stored in a program database 136 to perform the functions described herein.

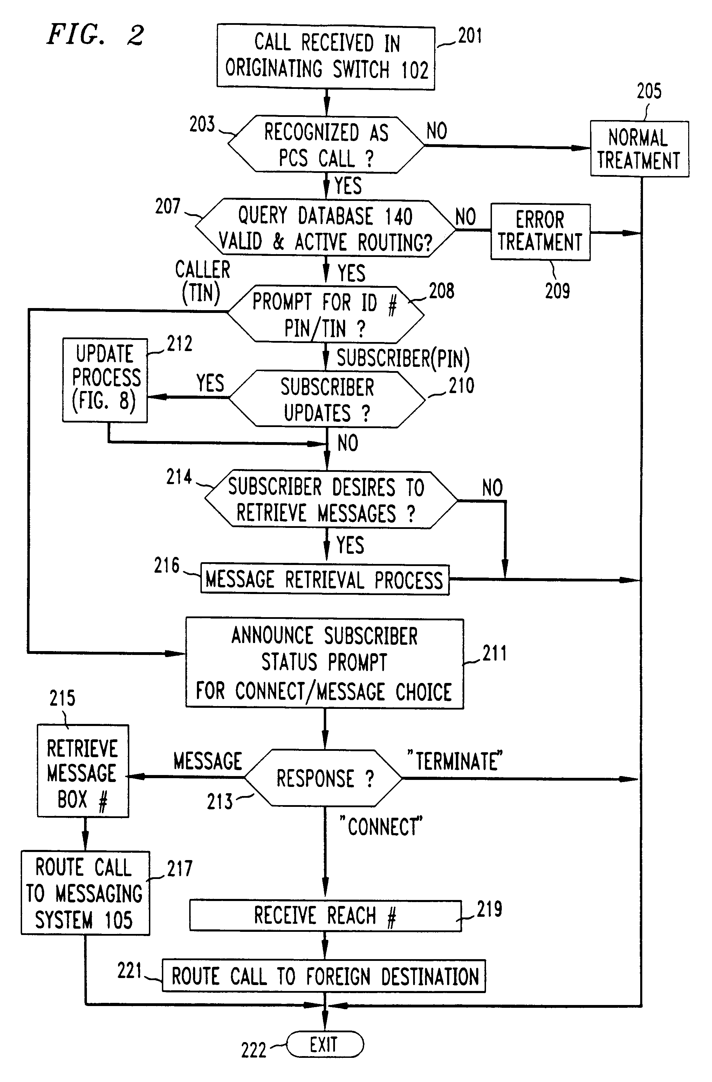

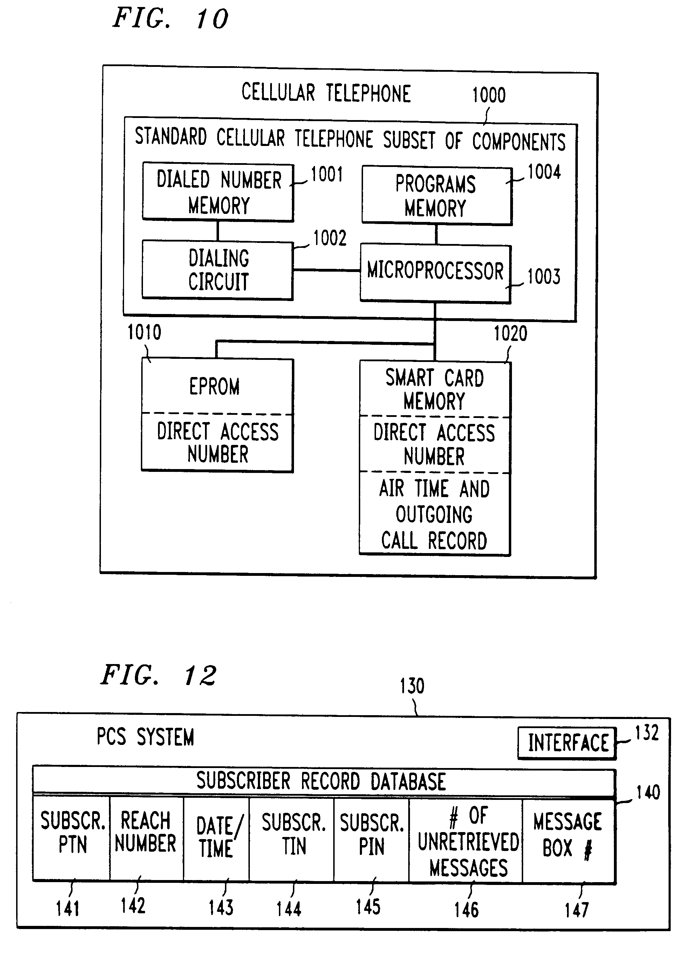

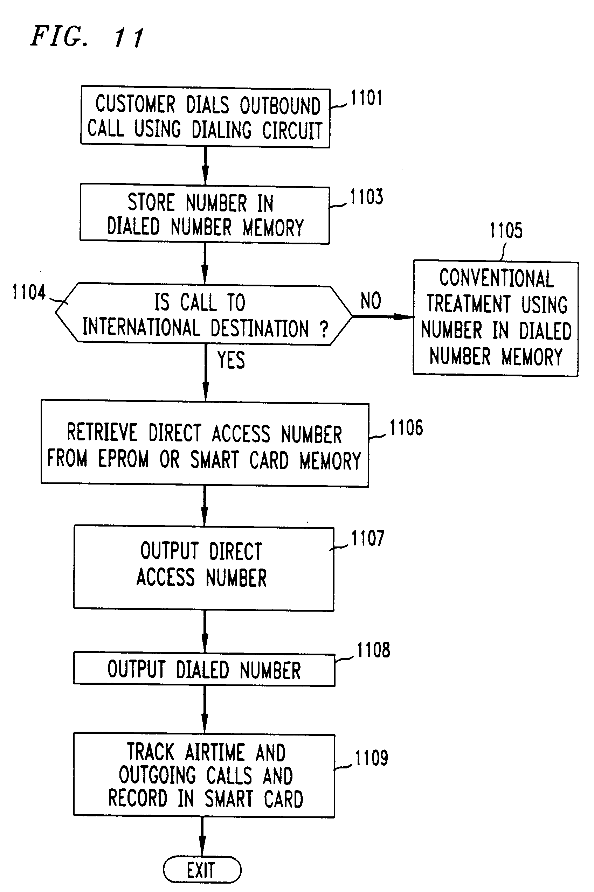

As illustrated in Fig. 12, each record in subscriber PTN database 140 has multiple fields, illustratively fields 141 through 147. The PTN of each subscriber is stored in field 141. For each subscriber, the corresponding reach number(s) and date/time at which the reach number(s) is(are) active is(are) stored in fields 142 and 143, respectively. For purposes described below in conjunction with step 208 of Fig. 2, a subscriber's Traveler Identification Number (TIN) is stored in field 144. The subscriber's Personal Identification Number (PIN), known only to the subscriber, is used for security purposes, enabling the subscriber to charge calls, administer itinerary changes, and to access messages. The PIN is stored in field 145. If a PCS subscriber is unavailable or does not wish to receive calls at a particular time, incoming calls to that subscriber's PTN may be directed to a "message box" assigned to that subscriber. For this purpose the message box "reach number" for this subscriber is stored in field 147, and the number of unretrieved messages received for the subscriber is stored in field 146.

When a call is placed from a telephone such as telephone 101 or 103 to the PTN of a PCS subscriber, call completion is accomplished as illustrated in the process diagram of Fig. 2. The call is initially received in network 100 in an originating switch, such as switch 102, or 108, in step 201. (Note here that the call may gain access to interexchange switches in network 100 via a local exchange carrier (LEC) network or another alternate access arrangement.) Within switch 102 or 108, if the call is recognized as a PCS call in step 203, typically because it includes a special prefix (NPA) such as "700", the process proceeds with step 207. Otherwise, if the call cannot be differentiated from other calls such as conventional toll-free (800) calls and long distance calls having conventional NPA's or "area codes", normal or conventional treatment is provided in step 205.

In step 207, responsive to receipt of the PCS call, a query is launched from switch 102 or 108 via signaling system 104 to subscriber PTN database 140 in PCS system 130. If the PTN is invalid or inactive, error-treatment is invoked in step 209 causing an announcement to be played to the caller. In this situation, the call is dropped or transferred to a help desk, not shown. If the PTN is valid and active, PCS system 130 continues processing.

When calls are placed to PCS system 130, the calls can be for several different purposes. First, the PCS subscriber may be calling the system for the purpose of making updates or retrieving messages. Second, and more frequently, callers may be attempting to contact PCS subscribers. In the latter category, the callers can be of two types: (a) persons previously known to the subscriber who have been supplied with a Traveler Identification Number (TIN) which permits distinguishing between sequential assignees of a particular temporary PTN, and permits the PCS subscriber to distinguish among classes of services he/she assigns to specific potential callers, or (b) other callers.

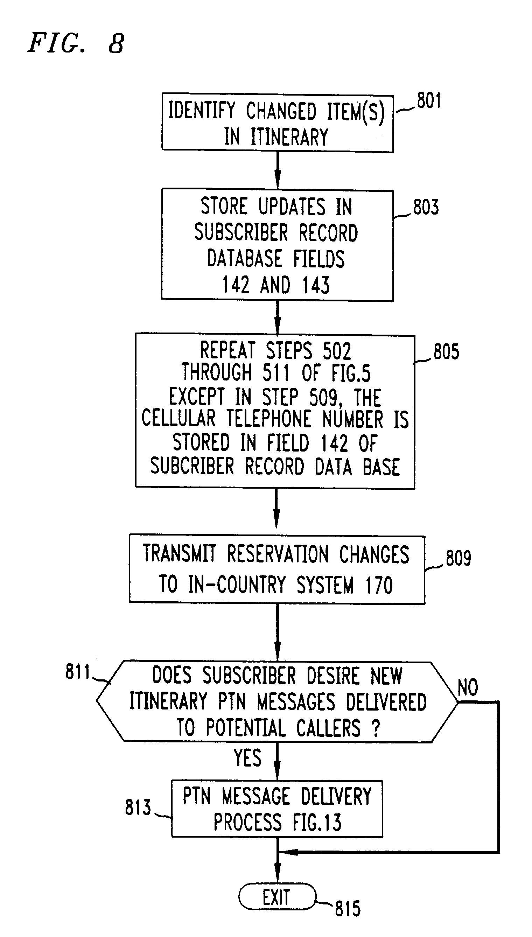

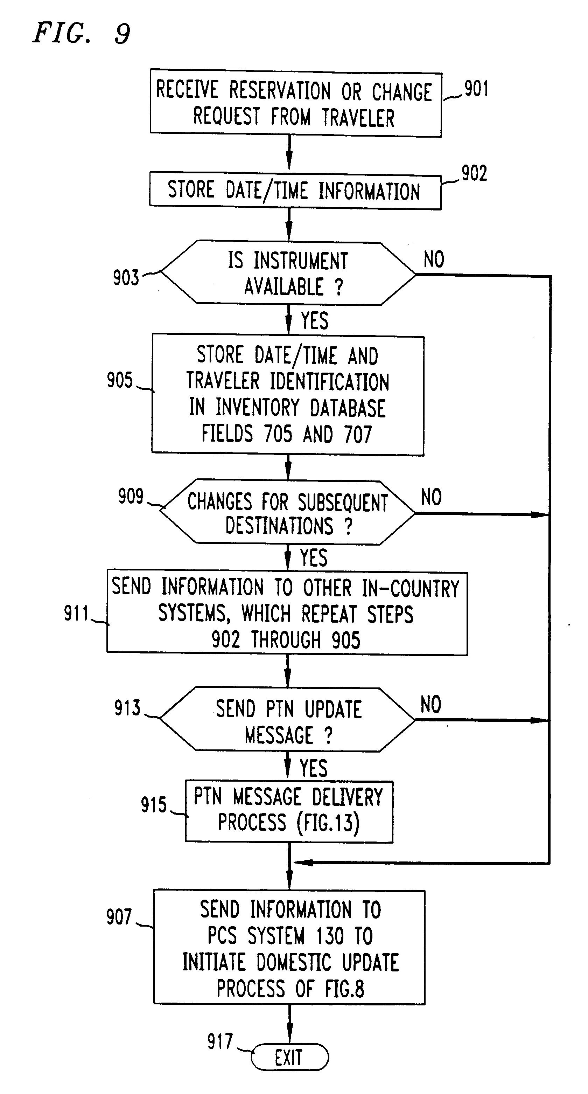

Returning to Fig. 2, in step 208, the caller is prompted to enter an ID number, which can be a PCS system PIN or a TIN. If the caller is a PCS system subscriber, and he/she enters a valid PCS PIN, the subscriber is given an opportunity to make updates to his or her subscriber profile by a positive response to a prompt provided in step 210. These updates are captured in the update process (Fig. 8) in step 212. Subsequently, PCS system 130 announces the number of unretrieved messages stored in messaging system 105. If the subscriber indicates in step 214 that he or she desires to obtain unretrieved messages, the message retrieval process is then invoked in step 216 by routing the call to messaging system 105 at the box number stored in subscriber record database field 147. Note that messaging system 105 must be arranged to update PCS system 130 whenever messages for a particular subscriber are received or retrieved, so that PCS system 130 always contains accurate information relating to the number of unretrieved messages for that subscriber. Information may be exchanged between the two systems by signaling through network 100. If the subscriber does not wish to retrieve messages, or, after all messages have been retrieved, the process of Fig. 2 is exited in step 222.

If, in step 208, the caller is not a PCS subscriber, but instead enters a TIN provided to the caller by a traveler using the present invention, the PCS system triggers an announcement in step 211 advising the caller that the call placed to the PCS subscriber will be forwarded to a remote location. This is done for several reasons. For example, when a call originally placed to a local PTN is forwarded to a remote location, the telephone charges will likely be higher than anticipated, and the caller should be forewarned. Also, the time zone difference between the local and remote locations may be significant. In response to the announcement, the caller may choose between continuing the call to the remote location (step 219), leaving a message for the PCS system subscriber, (step 217) using messaging system 105, or terminating the call, which causes the process of Fig. 2 to terminate in step 222.

If in step 213, the caller chooses to be connected to the subscriber in the remote location, the reach number stored in field 142 in the subscriber PTN database 140 is retrieved in step 219, and information is forwarded to theswitch handing the call in step 221, so that the call may be routed to that location. The process ends in step 222. If, on the other hand, the caller chooses to leave a message in step 213, the message must be routed to the appropriate message box within messaging system 105. This is accomplished in step 215 by retrieving the information stored in field 147 in the subscriber PTN database 140 and, in step 217, sending this information, together with routing instructions, to switch 102 or 108, so as to route the call to messaging system 105. If in step 208, the caller is unable to provide a PIN or a TIN, step 211 is invoked. Step 211 is designed to identify the caller as a subscriber (who forgot his/hr PIN), a caller (who is not in possession of a TIN), or an error. Step 211 can be provided by an automated voice response system or by a human agent at a help desk.

In the above description, several announcements are played to callers and/or PCS subscribers at various points in the process. This may be accomplished by a voice query and response system operating in conjunction with switches 102 and/or 108. Such a system may be a Conversant® voice response system available from AT&T. Note that the messaging system 105 described above can be implemented by a unit such as the Audix® system available from AT&T.

The above described implementation of PCS system 130 routes calls to subscribers in remote locations only when the subscriber's reach number is stored in subscriber PTN database 140. In accordance with the present invention, mobility system 110 enables a reach number to be obtained and stored when a traveler is planning to visit one or more remote locations/destinations. Mobility system 110 can be implemented using an intelligent, program controlled voice response unit, which also may be a Conversant® voice response system available from AT&T. However, in order to maintain the generality of the following description, mobility system 110 shown in Fig. 1 includes a processor 114 arranged to operate under the control of programs stored in programs database 116, which programs are described below. Information utilized to serve travelers, i.e., individuals planning to travel to remote locations/destinations, is stored in a traveler record database 120 in the form of traveler records, which can be accessed (i.e., read and written) under the control of processor 114. Mobility system 110 is connected to other elements in network 100, such as switch 102 and a gateway switch 106 (discussed further below), via interface 118. Prompts can be played to new subscribers, and information obtained from them, in the form of DTMF digits or otherwise, through an announcement/data collection element 119, which also operates under the control of processor 114. Note that mobility system 110 and PCS system 130 can be co-located, so that certain information in traveler record database 120 and subscriber PIN database 140 can be combined. If the databases are not co-located, the common fields in the traveler record database 120 and the subscriber PTN database 140 are updated and kept consistent using update messages transmitted via signaling system 104.

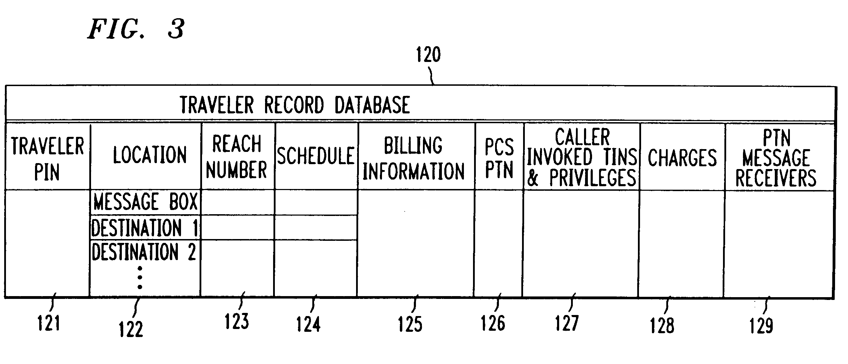

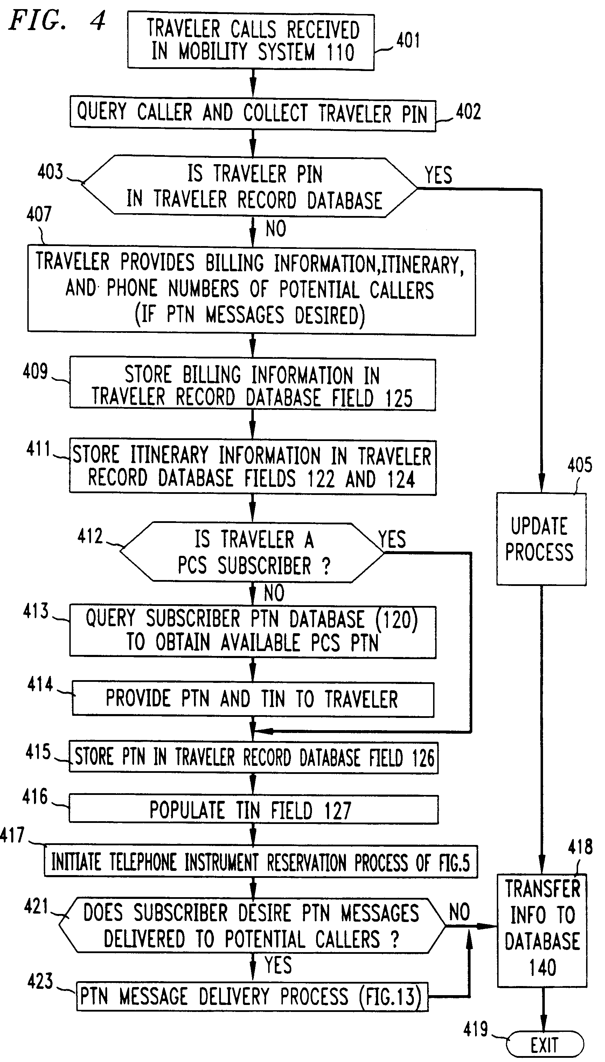

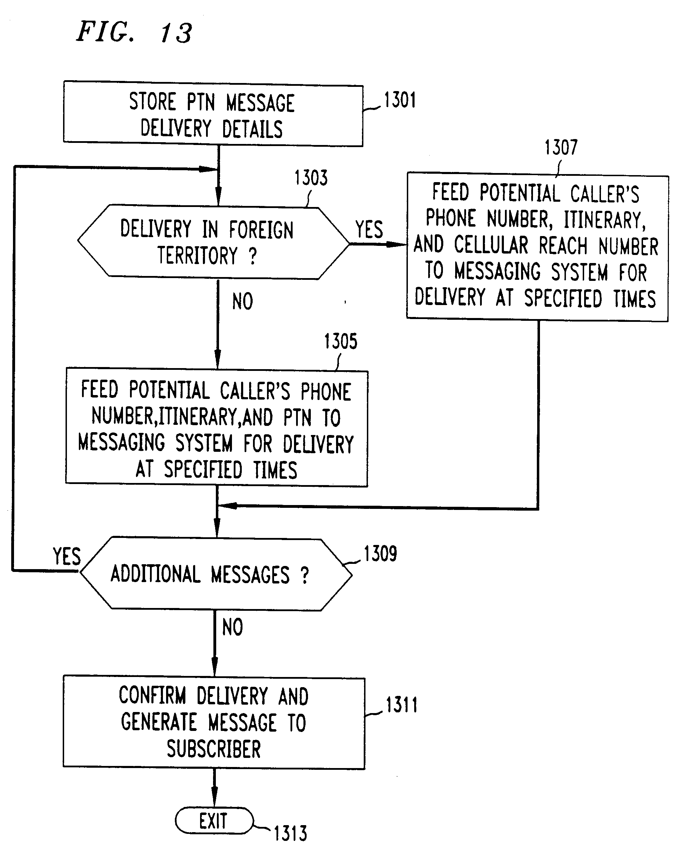

As shown in Fig. 3, a typical traveler record stored in traveler record database 120, includes, for each traveler, a personal identification number or PIN in field 121, uniquely identifying that traveler. For each traveler, one or more destinations or remote locations to which that traveler intends to travel are contained in field 122. For each location, the reach number at such destination (supplied in a manner described below) is contained in field 123, while the schedule, i.e., date/time period at which the traveler will be reachable at that destination, is contained in field 124. For subscribers desiring a messaging feature, one of the entries for location/reach number in field 122 is associated with the message box in messaging system 105 that is assigned to the traveler. Billing information for the traveler, such as a credit card or other account information needed for billing, is contained in field 125, while the current or outstanding charges incurred by the traveler in using the mobility system of the present invention are contained in field 128. the billing information in the latter field can come from information stored in PCS system 130, or in a field (not shown) in the subscriber PTN database 140. Caller-invoked TIN and associated caller privileges are contained in field 127. Privileges include such features as "message only", "caller pays", and "subscriber pays". The traveler's PTN used in PCS system 130 is contained in field 126. The telephone numbers for persons to be notified that the traveler may be reached using a PTN, are listed in field 129, for subsequent use in the process described in Fig. 13. If, for the sake of generality, the mobility system and PCS system are not co-located, the manner in which the traveler enrollment process (in which different fields in the subscriber record database are populated), and the manner in which the information is transferred from mobility system 110 to PCS system 130, will now be described in conjunction with Fig. 4, which also illustrates steps which link the mobility system to the PTN message delivery process.

To begin the enrollment process of Fig. 4, a person at a telephone station, such as telephone 101, calls a pre-arranged "mobility service" number, typically a toll-free or 800 number, that is associated with interface 118 to mobility system 110. The call is routed through network 100, illustratively through different network elements such as switch 102, to mobility system 110, which receives the call in interface 118 and connects it to announcement/data collection element 119. Viewed from mobility system 110, the process of Fig. 4 begins when the call is received in step 401. In response to such call receipt, the caller is assumed to be a new traveler desiring to establish a traveler record for the purpose of receiving calls in a remote location. Accordingly, a "new" record with an available PIN is opened in traveler record database 120. The process then continues with step 407.

In step 407, the caller is queried through an announcement from announcement/data collection element 119 for billing information, for his/her travel itinerary, and for PTN message delivery needs. With respect to billing information, a credit card account, smart-card, or any other information suitable for charging the traveler for use of the mobility service may be obtained. If desired, the billing account information can be verified or validated while the customer is on-line, as by a database query launched through network 100. With respect to the travel itinerary, the caller is queried for the destinations to which he or she intends to travel, and the dates/times at which he or she will be present at the different remote locations. With respect to PTN message delivery, the caller is queried for the phone numbers of potential callers to whom messages about the PTN/TIN (and itinerary) should be delivered. In response to each announcement, the information provided by the caller may be temporarily stored in the data collection portion of announcement/data collection element 119. As an alternative to temporary storage in announcement/data collection element 119, the itinerary information provided by the caller can be stored directly in the open record when it is received. Announcements may be nested or tiered in the form of an audio menu in a well known manner, so that the caller is presented with a logical flow of questions. Help may be provided by signaling with a special DTMF key or sequence. If the telephone instrument used to subscribe to the service has graphical or alphanumeric capabilities, appropriate interfaces may be provided for these devices in the enrollment process. If the caller enrolls using a data terminal or a kiosk rather than a conventional telephone, he/she may complete and transmit an electronic form rather than enter DTMF digits.

After information has been obtained from the caller in step 407, the information is stored in the appropriate fields in the open record in traveler record database 120. Specifically, in step 409, the billing information is stored in field 125, while in step 411, the location and date/time information from the itinerary is stored in fields 122 and 124, respectively.

In order to populate field 126 containing the PCS PTN used by this traveler, a determination is made in step 412 as to whether the traveler is already a PCS subscriber. If not, an available PTN must be obtained. This is accomplished in step 413, in which subscriber PTN database 140 is queried. The query may be via signaling which is communicated via interface 118 and transmitted, for example, over elements in network 100 such as switch 102 to PCS system 130. Within PCS system 130, the query is received, typically in an interface 132, and may be processed or responded to manually or automatically. The PTN output from PCS system 130 is returned to mobility system 110 via the same path, typically in the form of a DTMF sequence.

The PTN obtained in step 413 is provided to the traveler in step 414, by an announcement. If the traveler is already a PCS subscriber, steps 413 and 414 may be bypassed. In either event, the PTN is stored in field 126 in step 415. Note here that a PTN may be provided in alternative embodiments, by storing available PTN's within mobility system 110, and then simply using the next available PTN for a traveler who needs one.

Caller invoked TIN's are next generated and supplied to the traveler in step 416, so that field 127 may be populated. For each TIN, an associated level of caller service may also be established. As stated previously, these TIN's identify and distinguish different callers who may attempt to contact the traveler using the PTN. As with the PTN, available TIN's may be obtained from PCS system 130 via a query launched via signaling system 104. Alternatively, TIN's may be stored locally in mobility system 110, and available TIN's used as needed.

An example will illustrate the use of TIN's. Assume that a traveler expects to be called by a spouse and by a business associate. Each person is assigned a different TIN, which is supplied by the person in response to a prompt in step 208 of Fig. 2, when the person places a call to the traveler. The TIN for the spouse is recognized by the system, and may indicate that the traveler will pay for the call, and that the call should always be forwarded to the traveler, even in a foreign destination. On the other hand, the TIN for the business associate is recognized by the system, and may indicate that the caller will receive an announcement requesting that he/she pay for the call, and that the call be forwarded to the messaging service/system under certain conditions.

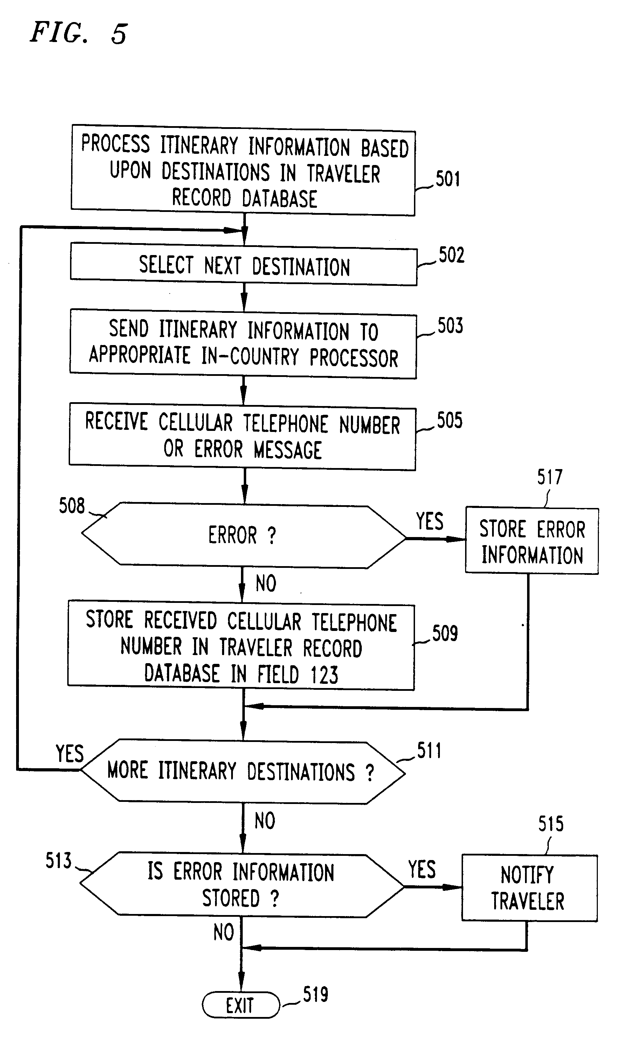

After step 416 is completed, the telephone instrument reservation process of Fig. 5 is performed in step 417 in Fig. 4. Basically, the reservation process determines the telephone number of available telephone instruments that are provided to travelers in the remote location(s) to be visited, so that one or more reach numbers may be stored in field 123 of the traveler record in traveler record database 120. Next, the traveler is queried in step 421, to determine if the traveler desires to invoke an option feature of the invention whereby messages are delivered advising potential callers that the traveler may be reached in a remote location using the PTN assigned to the traveler. If a positive response is obtained in step 421, the PTN message delivery process of Fig. 13, shown as step 423 in Fig. 4, is performed. Basically, in this process, the numbers of the individuals to be called are stored in field 129, and communicated to the PTN message delivery process.

The process of Fig. 4 then proceeds to step 418, whereby appropriate information in traveler record database 120 is extended to and stored in subscriber PTN database 140, so that the information in each database for each subscriber/traveler is updated and consistent. For example, for a given traveler/subscriber (i.e,. PCS PTN in field 126 of traveler record database 120 matches subscriber PTN in field 141 of PCS subscriber record in subscriber PTN database 140) information pertaining to TIN's in field 127 of a traveler record in traveler record database 120 is inserted in field 144 of a PCS subscriber record in subscriber PTN database 140. Likewise, information in field 123 of a traveler record in traveler record database 120 is inserted in field 142 of a PCS subscriber record in subscriber PTN database 140. Correspondence between additional fields 124 and 143 is also established. Information transfer and updating may be accomplished in real time, each time a record is established and stored in traveler record database 120, or on a batch basis, for example, during each evening or at night. Mobility system 110 transfers these records to PCS system 130 via the signaling system.

The process of Fig. 4 then ends in step 419.

Note that the foregoing description assumes that the mobility service contemplated by this invention is established before the traveler begins his/her trip. Alternatively, the traveler could establish such service without prior reservation, e.g., on an airplane, or at a hotel, booth or kiosk in the remote location, by providing the information required to fill the appropriate fields in the temporary personal communication service system profile.

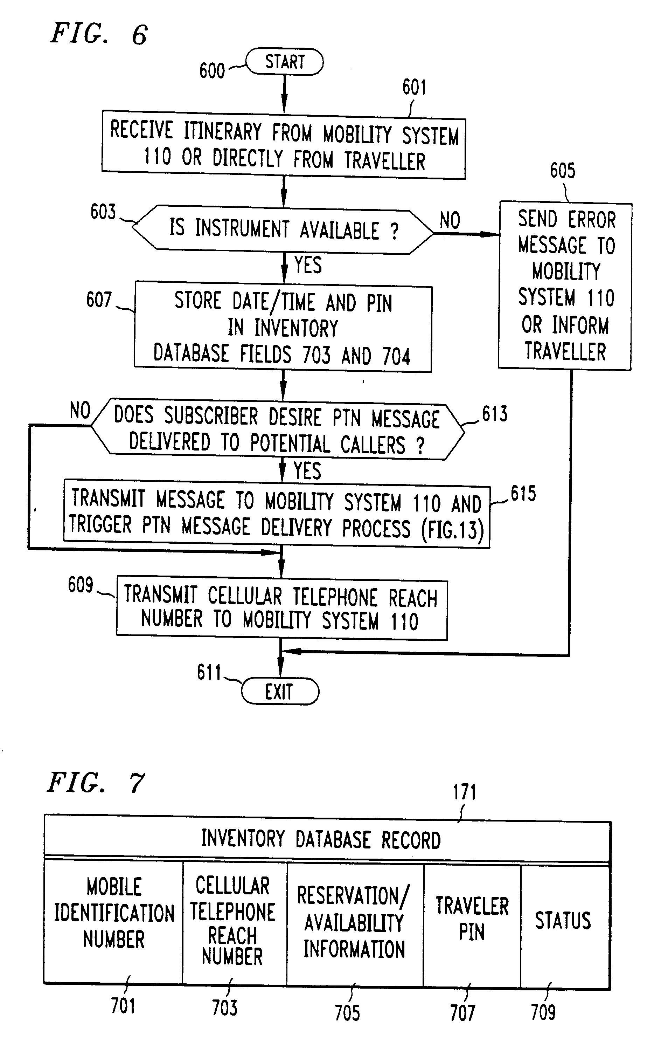

Referring now to Fig. 5, there is shown the process performed in mobility system 110 in order to reserve cellular telephone instruments at the remote location(s) to be visited by the traveler. Basically, this process can be performed in two ways. First, availability information may be maintained locally in mobility system 110, and, when a reservation is made, notice may be sent to the appropriate remote processors 170. This arrangement is discussed below in conjunction with Fig. 6. Second, availability (inventory) information may be maintained in remote processors 170, and when a cellular telephone instrument is needed, a reservation is made by a query/response. This arrangement is illustrated in Fig. 5. In step 501, the traveler's itinerary, as contained in the record now stored in traveler record database 120, is examined or processed, in order to select individual destinations and corresponding date/time information which specifies the remote locations that the traveler will visit. In step 502, the "next" destination is selected, which is the "first" destination when the process of Fig. 5 is begun, and each succeeding destination when portions of the process are repeated, as described below. In step 503, schedule (date/time) information for the selected one of the destinations in the customer's itinerary is transmitted to an appropriate remote processor 170, in order to obtain the telephone number of a cellular telephone instrument to be provided to the traveler at that destination. This aspect of the invention is discussed more fully below. The cellular telephone number ("reach") received from the remote processor in response to the transmission of step 503 is received in mobility system 110 in step 505. The response is validated in test step 508 and, if valid, is stored in field 123 of the customer's record in traveler record database 120, in step 509, such that the cellular telephone number to be used at this destination is associated with the date/time in field 124 during which the traveler will be at that destination. Step 511 then tests to determine if there are other destinations in the traveler's itinerary for which cellular telephone numbers have not yet been provided. If so, steps 502-509 are repeated for the other destinations. If not, the process continues with step 513, which relates to invalid responses.

More particularly, if it is determined in step 508 that an invalid response (error message) has been received in step 507, information indicating that fact is stored in step 517. Step 513 tests to determine if any such error information has been stored. If so, the customer is notified in step 515, indicating that arrangements could not be made with respect to one or more destinations. If a negative result is obtained in step 513, the cellular telephone instrument reservation process of Fig. 5 is terminated in step 519.

Before explaining an alternate telephone instrument reservation process performed in remote processors 170 in accordance with the present invention, as illustrated in Fig. 6, it is instructive to return to Fig. 1, which illustrates the individual remote processors 170 where the reservation process is performed. As shown in Fig. 1, each remote processor may be located in a separate remote location 160 or 161, each of which is equipped to complete cellular telephone calls via one or more mobile telephone switching offices (MTSO's) such as MTSO's 162 and 163. Each remote processor may include a program controlled voice response unit similar to the one in mobility system 110. Alternatively, the individual components shown in Fig. 1 may be used. Within each remote processor 170 is a processor 173, which operates under the control of stored programs in a program database 174 and has access to cellular telephone inventory and reservation records stored in inventory database 171. Each remote processor 170 also includes an announcement and data collection system 175, which can play stored announcements and collect incoming information. Communication into and out of remote processor 170 is accomplished via interface 172.

Inventory database 171 contains records which represent an inventory of all cellular phones available at that remote location (160 or 161) and their actual cellular phone numbers. The format for a typical record stored in inventory database 171 is illustrated in Fig. 7. Field 701 contains the mobile identification number (for example, a serial number) of a particular cellular telephone instrument. Field 702 contains the cellular telephone reach number assigned by the mobile telephone service provider in that location for that instrument. Field 703 contains the date/times during which that instrument has been reserved for use by a particular traveler, and field 704 contains the PIN that identifies the traveler having the reservation. If field 703 is empty, the instrument has not been reserved. Field 709 contains the status of the instrument/reach number (e.g., in-use, in repair, in inventory). Note that a remote processor 170 can be contained in a kiosk, and be implemented with or without manual support.

Referring now to Fig. 6, there is illustrated the alternate telephone instrument reservation process performed in the remote processors 170, In step 601, remote processor 170 receives a reservation request from mobility system 110. This request, as stated previously, contains a date/time period during which the traveler will require the use of a cellular telephone instrument, and is generated in step 503 of Fig. 5. In response, remote processor 170 queries its inventory database 171 in step 603 to determine if a cellular telephone instrument is available for the time period set forth in the request. If not, an unavailability or error message is sent to mobility system 110 in step 605. As stated previously, this message is thereafter communicated to the customer. Assuming that a telephone instrument is available, in step 607, the date/time during which this instrument is being reserved is written into field 703 of the inventory record in inventory database 171, and the PIN for the traveler for whom the reservation is being made is entered in field 704 of the same record. In step 613, a determination is made as to whether the traveler wishes PTN messages to be sent to potential callers. If so, information identifying the persons to be notified is transmitted to mobility system 110 (step 615) for delivery in accordance with the PIN message delivery process described below in connection with Fig. 13. A similar process can be triggered to inform callers in the remote location of the cellular reach number. Next, in step 609, the cellular telephone number of the reserved telephone instrument is transmitted to mobility system 110, so that it may be stored in field 123 of the traveler record database 120 (and subsequently in the subscriber PTN database 140). The instrument reservation process is then terminated in step 611.

Note here that in step 503 of Fig. 5, itinerary information is transmitted from mobility system 110 to one or more remote processors 170, while in step 609 of Fig. 6, a cellular telephone reach number is transmitted from one or more remote processors 170 to mobility system 110. These transmissions may be accomplished via a long distance telephone call established by mobility system 110 to a remote processor, which follows the path from interface 118 to switch 102, and thence through gateway switch 106 in network 100 to gateway switch 180 serving the particular remote processor. If the traveler is going to a destination in remote location 160 gateway switch 180 connects the call to interface 172 within remote processor 170. If the traveler performs the process of Fig. 6 in remote location 160, then remote processor 170 initiates a long-distance call to mobility system 110, which updates PCS system 130.

In accordance with another arrangement contemplated by this invention, the telephone instrument reservation processes of Figs. 5 and 6 may be modified so that "reservation" simply assures that any telephone instrument selected from a pool of telephone instruments will be available at one or more remote locations; assignment of the reach number for a particular available telephone instrument in the pool is left for a later time at which the traveler actually reaches a destination and is provided with a particular telephone instrument. With this arrangement, step 505 in the process of Fig. 5 provides confirmation that a message has been received in mobility system 110 from remote processor 170 indicating that at least one telephone instrument in the pool will be available at the time that the traveler wishes to obtain the telephone instrument at the desired remote location. Step 509 provides an indication that an instrument in the pool has been reserved and stores such indication in field 123. With respect to the process illustrated in Fig. 6, step 609 transmits to mobility system 110, an indication that a telephone instrument in the pool is available and has been reserved. When the traveler actually reaches a destination, and a specific telephone instrument is actually assigned to the traveler, remote processor 170 initiates an update to PCS system 130, such that the reach number in field 142 of the subscriber PTN database 140 is populated at that time. This update can be accomplished by a data transfer directly from remote processor 170 to PCS system 130, or by an outgoing phone call from the telephone instrument assigned to the traveler to the PCS system 130. Either mechanism can also be arranged to trigger PCS system 130 to dial the traveler's PTN, so that an immediate verification that the total system is operating properly can be obtained while the traveler is still at the kiosk/counter at which the instrument was provided.

After the traveler record in traveler record database 120, the inventory record in inventory database 171 and the subscriber record in subscriber PTN database 140 have all been processed and include the appropriate information as described above, the traveler may change his or her travel plans. In the event of a change, the traveler would again initiate a call using the process of Fig. 2. In step 210, it would then be determined that the caller is a subscriber, and the update process of Fig. 8 would be initiated in step 212. Referring to Fig. 8, the update process begins in step 801, when the traveler is asked to enter the changes to his or her itinerary. In step 803, these changes or updates are stored temporarily, examined, and sent to the appropriate remote processor 170 to verify instrument availability and associated reach number. The process continues with step 804, in which PCS system 130 receiving confirmation or an error message from the remote processor. If confirmed, the update is stored in subscriber record database fields 142 and 143, in step 807. If an error indication is received, it is stored for subsequent customer notification in step 810. the process continues in step 808. If there are more itinerary changes, the process iterates at step 803, otherwise, step 808 checks for an error indication, and the traveler is notified of instrument unavailability at a particular destination in step 810. If the changes made by a traveler require that potential callers be notified, as determined by a positive result in step 811, the PTN message-delivery process (Fig. 13) is invoked in step 813 before the update process of Fig. 8 is terminated in step 815.

Referring to Fig. 9, there is shown the process for effecting an itinerary update at a remote processor 170. This process differs from Fig. 8 in that the process is begun by a call from a traveler to one of the remote processors 170 in the emote location in which the traveler desires to reserve a cellular telephone instrument. The traveler may use a telephone, a kiosk, or a booth, to enter itinerary updates. The process begins in step 901, in which the call requesting a reservation or a change is received in one of the remote processors 170. In step 902, processor 173 causes an announcement to be played to the traveler requesting input of information identifying the traveler and the date/time period during which a cellular telephone instrument is requested. Also, information canceling existing reservations may be provided by the traveler at this time. In step 903, a determination is made by inventory database 171 to assure that a telephone instrument is available. If so, the traveler's PIN/TIN is stored in field 707 of inventory database 171, and the availability information in field 705 is updated, both in step 905. Assuming a negative outcome in step 909, indicating that there are no other destinations to be updated, a message is transmitted to PCS system 130 in step 907 to initiate the update process of Fig. 8. This is done in order to update the information in subscriber PTN database 140. If a positive result occurs in step 909, then information is transmitted to other appropriate remote processors in step 911, so that steps 902-905 can be repeated in those systems. If the traveler wishes to invoke the PTN message-delivery process, and notify potential callers, a positive result is obtained in step 913 and the process in Fig. 13 is invoked in step 915. The process of Fig. 9 is then terminated in step 917.

With respect to the cellular telephone instruments provided to subscribers pursuant to the present invention, we have recognized the desirability of providing a cellular telephone which is pre-programmed to recognize certain dialing patterns indicative of a long distance call, and to route the call to a "local" number that can more efficiently complete that call. With this arrangement, the operator or attendant at the local number can be provided with the dialed number.

Referring now to Fig. 10, there is shown, in block diagram form, one arrangement for a cellular telephone instrument that may be provided to a traveler in a remote location (e.g., a foreign country). The instrument includes a collection of standard cellular telephone components, a relevant subset of which is indicated generally at 1000, such as a dialing circuit 1002, a dialed number memory 1001, a microprocessor 1003 and a memory 1004 for storing programs that control the operation of microprocessor 1003. These elements, and others not shown and which form no part of the present invention, operate cooperatively, in a manner well known to those skilled in the art, to enable receipt and generation of cellular telephone calls to and from the instrument.

In accordance with the invention, also included in the instrument of Fig. 10 is either or both of the following: an EPROM circuit 1010, in which is stored a direct access telephone number and frequently used numbers, described below, or a smart card memory 1020 in which the same direct access telephone number can be stored, and which can further record all airtime and outgoing calls for the purpose of billing the traveler and preventing fraudulent use of the instrument. In either event, the operation of the instrument is as shown in Fig. 11.

In step 1101, the traveler dials a telephone number of an outbound telephone call, using dialing circuit 1002. In step 1103, the dialed number is stored temporarily, in memory 1001. Next, in step 1105, a determination is made as to whether the call is to a remote destination, i.e., one that can be reached by using a special local access number such as the number for the USA Direct dialing service available from AT&T. If a positive result is reached in step 1105, the process continues with step 1107, in which the direct access number stored in EPROM circuit 1010 or smart card memory 1020 is retrieved. This number is dialed and, when a platform or attendant is reached, the dialed number stored in memory 1001 is output in step 1108. In step 1109, airtime and outgoing calls are tracked for subsequent billing options. In this way, the customer need not remember the direct access number nor worry that the call may be routed in a more expensive manner. Frequently dialed numbers can also be dialed using the smart-card memory.

Fig. 13 describes the PTN message delivery process triggered in Figs. 4, 6 and 9. When the traveler desires to inform potential callers of his PTN number the system (mobility system 110 or remote processor 170 as appropriate) stores the details required (step 1301) including potential caller phone number, PTN and/or cellular reach number, and itinerary. The announcement/data collection element 119 (in step 1305) or announcement and data collection system 175 (in step 1307) delivers messages to potential callers according to the schedule, and confirms delivery via, for example, interactive DTMF prompting with each potential caller. The process is repeated for each additional message (step 1309) until done. Message-delivery confirmation messages are generated in step 1311 and stored in the traveler's message box for subsequent pick-up as part of the message retrieval process (step 212) in Fig. 2.

The process for billing for calls originated from the cellular telephone instrument provided to a traveler in accordance with the present invention can be accomplished in several ways. One embodiment is illustrated in Fig. 10. As shown therein, calls originated from the telephone are monitored and timed by a smart card 1020 within the telephone instrument. Upon returning the instrument to the remote processor from which it was provided, the information from smart card 1020, as well as the customer's PIN, is downloaded to a local memory, and processed to calculate the applicable charges. The information is then transmitted to mobility system 110 and stored in field 128. Ultimately, the charges are applied using the billing information previously supplied by the traveler. Also, the traveler can be given a detailed account of the bill upon return of the telephone instrument at each remote location.

Mobility system 110 may also be arranged to bill each traveler for the long distance portion of the calls made by that person, in which case the local cellular service provider will bill the traveler separately for airtime and usage of the cellular telephone instrument. Alternatively, mobility system 110 may be arranged so that telephone instruments are owned by an entity that purchases airtime in bulk. This entity would be considered a reseller of the local cellular telephone service. In this case, the entity offering the cellular service would bill each traveler for all parts of the call.

As yet another alternative, mobility system 110 may be arranged to bill the traveler directly for airtime and usage of the cellular telephone instrument, and then pay the local phone companies their share. This would eliminate dual billing to the traveler, while avoiding the need to buy airtime in bulk. Additionally, it would decrease the likelihood of fraud in some locations where telephone fraud is rampant.

Various modifications and adaptations of the present invention are possible. Accordingly, the invention is to be limited only by the appended claims. For example, as stated previously, as an alternative to the reservation process illustrated in Fig. 5, inventory information relating to cellular telephone instruments available in various remote locations, may be maintained within mobility system 110 or PCS system 130. In this event, the mobility system or PCS system also performs the reservation process of Figure 6, and maintains the inventory database of Figure 7.

Also, "card technology" may be employed to assign a traveler's PTN to a specific cellular telephone instrument in a remote location. In this arrangement, the traveler would arrive at his or her destination and use the card (smart or magnetic stripe) through a card reader which may be an integrated part of the telephone instrument. The information obtained from the card reader would identify the user, cross-reference his or her PTN, and assign the PTN to the phone number of a particular cellular telephone, the identification number of which would be entered directly, or using, for example, bar code technology.

In another alternative embodiment of the invention, the cellular telephone instrument may include a satellite paging capability, so that the subscriber's PTN could be used to page the subscriber and allow the subscriber to answer the call or send the call to an alternate destination such as voice mail.

## Claims

1. A method of communicating with a traveler comprising
storing telephone numbers that can be used to receive calls in a remote location;
assigning, on a temporary basis, one of said telephone numbers to a traveler desiring to receive calls in said remote location, and
storing said one of said telephone numbers in a personal communications system arranged to direct calls to said traveler when his personal telecommunications number is dialed by a caller.

2. The method of claim 1 wherein each of said telephone numbers is associated with telephone equipment and wherein said one of said telephone numbers stored in said personal communications system is associated with telephone equipment available for assignment to said traveller.

3. The method of claim 1 or 2 further including the step of
providing said particular personal telecommunications number to persons desiring to place calls to said called party.

4. The method of claim 3 wherein said providing step includes:
storing information identifying said persons desiring to place calls to said called party,
originating a telephone call to said persons using said stored information; and
playing an announcement to said persons, said announcement containing said special service number.

5. The method defined in claim 3 or 4 wherein said storing step includes storing information identifying a time period during which said called party can be called using said special service number, and
said playing step includes providing said persons with information relating to said time period.

6. The method defined in any of claims 3-5 further including the steps of
storing, for each of said persons desiring to place calls to said called party, an identification number, and
requesting said persons to enter said identification number when initiating a call to said called party using said special service number.

7. The method of claim 6 wherein said method further includes
assigning identification numbers to callers desiring to call said person in said remote location,
examining said identification numbers when said callers place calls to said person, and
routing ones of said calls to a messaging system and others of said calls to said person.

8. A system (Fig. 1) for communicating with a traveler comprising
means (171) for storing telephone numbers that can be used to receive calls in a remote location;
means (110) for assigning, on a temporary basis, one of said telephone numbers to a traveler desiring to receive calls in said remote location, and
means (140) for storing said one of said telephone numbers in a personal communications system (130) arranged to direct calls to said traveler when his personal telecommunications number is dialed by a caller.

9. The system of claim 8 wherein each of said telephone numbers is associated with telephone equipment and wherein said one of said telephone numbers stored in said personal communications system is associated with telephone equipment available for assignment to said traveller.

10. The system of claim 8 or 9 further including the step of
means (114, 118, 119, 120) for providing said particular personal telecommunications number to persons desiring to place calls to said called party.

11. The system of claim 10 wherein said providing means includes:
means (120) for storing information identifying said persons desiring to place calls to said called party,
means (114, 118) for originating a telephone call to said persons using said stored information; and
means (119) for playing an announcement to said persons, said announcement containing said special service number.

12. The system defined in claim 10 or 11 wherein said storing means (120) includes:
means for storing information identifying a time period during which said called party can be called using said special service number, and
said playing means (119) includes means for providing said persons with information relating to said time period.

13. The system defined in any of claims 10-12 further including:
means (114, 116, 120) for storing, for each of said persons desiring to place calls to said called party, an identification number, and
means (114, 116, 119) for requesting said persons to enter said identification number when initiating a call to said called party using said special service number.

14. The system of claim 13 wherein said system further includes
means (114, 116, 120) for assigning identification numbers to callers desiring to call said person in said remote location,
means (114, 116) for examining said identification numbers when said callers place calls to said person, and
means (102, 104, 108, 114, 116, 118) for routing ones of said calls to a messaging system (105) and others of said calls to said person.
